(19) Europäisches Patentamt

European Patent Office

Office européen des brevets

(11) **EP 2 669 040 B1**

(12) **EUROPÄISCHE PATENTSCHRIFT**

(45) Veröffentlichungstag und Bekanntmachung des Hinweises auf die Patenterteilung:
**11.07.2018   Patentblatt 2018/28**

(51) Int Cl.:
**B23K 26/12** *(2014.01)*     **B23K 26/00** *(2014.01)*

(21) Anmeldenummer: **13002753.5**

(22) Anmeldetag: **28.05.2013**

(54) **Verfahren zur Nanostrukturierung von keramischen, Glas-, Kohlenstoff-, Bor-, Silicium- und Verbundstoff-Materialien**

Method for the nanostructuring of ceramic, glass, carbon, boron, silicon and compound materials

Procédé de nanostructuration de matériaux en céramique, en verre, en carbone, en bore, en silicium et en matières composites

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2012   DE 102012010594**
          **16.08.2012   DE 102012016203**

(43) Veröffentlichungstag der Anmeldung:
**04.12.2013   Patentblatt 2013/49**

(73) Patentinhaber: **Airbus Defence and Space GmbH**
**85521 Ottobrunn (DE)**

(72) Erfinder:
 • **Brandl, Erhard**
   **85117 Eitensheim (DE)**

 • **Kurtovic, Ante**
   **33106 Paderborn (DE)**
 • **Wilhelmi, Christian**
   **85635 Höhenkirchen-Siegertsbrunn (DE)**

(74) Vertreter: **Kastel, Stefan**
**Kastel Patentanwälte**
**St.-Cajetan-Straße 41**
**81669 München (DE)**

(56) Entgegenhaltungen:
**DE-A1-102004 034 824      DE-A1-102009 028 583**
**DE-A1-102009 051 717      DE-C1- 19 523 900**
**US-A- 6 120 725           US-A1- 2008 070 001**

## Beschreibung

### Gebiet der Erfindung

Die Erfindung betrifft ein Verfahren zur Erzeugung einer anorganische und Verbundstoff-Materialien umfassenden Oberfläche, welche Oberflächenstrukturen mit Abmessungen im Sub-Mikrometerbereich aufweist.

### Stand der Technik

Die Benetzbarkeit mit und Haftung von flüssigen, halbfesten und festen Substanzen auf der Oberfläche von Werkstücken beispielweise aus Keramik, Glas, oder Kohlenstoff hängt stark von deren Oberflächenbeschaffenheit ab. Dies ist bei der Behandlung mit oder Aufbringung und Haftung von Materialien wie beispielsweise Klebstoff, Lack, Lot, Knochenzement, Dichtmittel, Haftvermittler, Schichten zum Schutz vor chemischer oder Wärmeeinwirkung oder auch biologischem Gewebe von hoher Bedeutung. Entfettung und anderweitige weitere Reinigung sowie mechanische Aufrauhung erhöhen die Benetzbarkeit und Haftung bis zu einem gewissen Grad. Mit zunehmender Rauigkeit der Oberfläche, d.h. größerer und strukturierterer Oberfläche und dadurch erhöhter chemischer/mechanischer Verankerung aufzubringender Materialien, verbessern sich diese Eigenschaften aber noch wesentlich.

Die EP 0 914 395B1 beschreibt ein Verfahren zur Behandlung einer ungereinigten Metalloberfläche, das die Behandlung der Oberfläche mit einem Organosilan und das Belichten der Oberfläche mit einem Laser umfasst.

Die US 6120725 A offenbart, dass mit einem Laserstrahl Nanostrukturen auf beispielsweise Aluminiumoxid erzeugt werden können. Es wird ein Parametersatz angegeben, bei dem dies erfolgen kann, nämlich mit einem gepulsten KrF-Excimer-Laser mit einer Wellenlänge von 248 nm und einer Pulsdauer von 30 ns. Es wird auch noch angegeben, dass C02-Laser und YAG-Laser benutzt werden können.

Es war ein Ziel der Erfindung, ein einfaches Verfahren möglichst ohne Notwendigkeit des Einsatzes von Chemikalien zur Erzeugung einer guten Rauigkeit auf Oberfläche aus Keramik, Glas, Kohlenstoff, Bor, Silicium und Verbundwerkstoffen zu entwickeln.

### Zusammenfassung der Erfindung

Die Erfindung betrifft eine Verfahren zur Erzeugung einer Oberfläche, welche Oberflächenstrukturen mit Abmessungen im Sub-Mikrometerbereich aufweist, mit den Merkmalen gemäss Anspruch 1.

### Kurze Beschreibung der Figuren

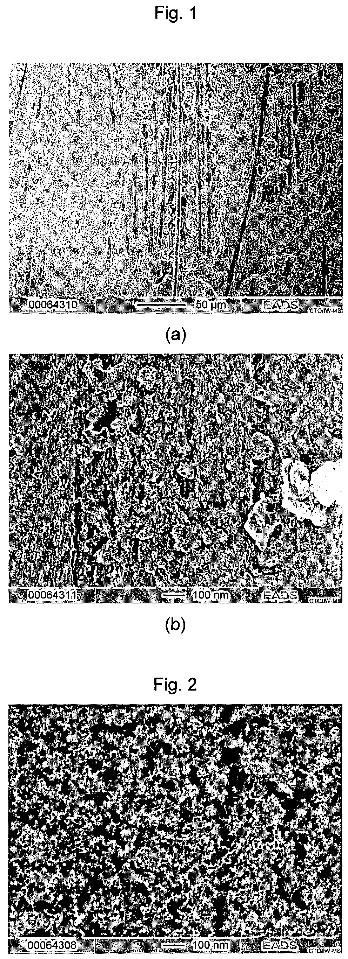

Die Figuren 1 bis 22 sind Rasterelektronenmikrographien, die unbehandelte und behandelte Oberflächen zeigen, wie in den Beispielen 1 bis 6 näher erläutert.

### Detaillierte Beschreibung

Wie eingangs erwähnt, ist die Aufrauhung bzw. Strukturierung im SubmikrometerBereich von Oberflächen für eine gute Haftung von Klebstoffen, Lacken, biologischem Gewebe und sonstigen Beschichtungen, wie Wärmeschutzschichten und metallischen Haftvermittlerschichten, essentiell.

Es wurde nun überraschend gefunden, dass lediglich durch eine einmalige oder mehrmalige Bestrahlung mit einem gepulsten Laser unter den im vorstehend beschriebenen Verfahren genannten Bedingungen sub-mikrostrukturierte (oder nanostrukturierte) Oberflächen der genannten Art erzeugt werden können, die für eine ausgezeichnete Haftung z.B. von Klebstoffen, Lacken, Lot, Dichtmittel, Knochenzement, Haftvermittler oder biologischem Gewebe sowie von Beschichtungen, wie Beschichtungen zum Schutz vor chemischer oder Wärmeeinwirkung, sorgen.

Wenn zwei Werkstücke mit einer wie oben beschriebenen Oberfläche oder ein solches Werkstück mit einem anderen Werkstoff unter Druck miteinander verbunden werden, kann auch die Haftung dieser gefügten Materialien erhöht werden, wenn auf mindestens einer Seite erfindungsgemäß Nanostrukturen erzeugt worden sind.

Die erfindungsgemäß erzeugten, mit Oberflächenstrukturen versehenen Oberflächen können je nach Ausführungsform im Allgemeinen offenporige, zerklüftete und/oder fraktalartige Nanostrukturen, wie offenporige Berg- und Tal-Strukturen, offenporige hinterschnittene Strukturen und blumenkohl- oder knollenartige Strukturen, aufweisen. Mindestens etwa 80%, bevorzugt mindestens etwa 90%, noch bevorzugter mindestens etwa 95% Erhebungen weisen eine Größe < 1 $\mu$m auf, die sich zum Beispiel im Bereich von etwa 10 nm bis etwa 200 nm bewegt. Mindestens etwa 80%, bevorzugt mindestens etwa 90%, noch bevorzugter mindestens etwa 95% der Zwischenräume weisen ebenfalls Breiten < etwa 1 $\mu$m auf, z.B. etwa 10 nm bis etwa 50 nm. Die Länge der "Täler" bei Berg- und Tal-Strukturen beträgt jedoch häufig mehr als etwa 1 $\mu$m.

Derartige Nanostrukturen bedecken in der Regel zumindest etwa 90 % der als Ebene berechneten Oberfläche, bevorzugt mindestens etwa 95 %. Bei optimal abgestimmten Prozessparametern (insbesondere Repetitionsrate, Abtastgeschwindigkeit und Fokusdurchmesser) kann die Nanostruktur sogar etwa 100% der als Ebene berechneten Oberfläche bedecken. Bei Verbundwerkstoffen, bei denen an der Oberfläche sowohl die Matrix als auch das der Matrix einverleibte Material, z.B. anorganische Fasern, vorliegen, kann es auch vorteilhaft sein, nur die Matrix oder nur das einverleibte Material zu strukturieren. In diesem Fall bezieht sich die vorstehend erwähnte Oberfläche auf die Oberfläche allein der Matrix oder allein des einverleibten Materials, wie anorganische Fasern.

Das Abtasten der Ausgangoberfläche mit dem Laserstrahl kann einmal oder mehrmals hintereinander mit denselben Prozessparametern und Wellenlängen oder mit unterschiedlichen Prozessparametern und Wellenlängen durchgeführt werden. Durch mehrmaliges Abtasten kann unter Umständen eine noch feinere Struktur erzeugt werden.

Gewöhnlich wird die Ausgangsoberfläche, die Material umfasst, das aus einer Keramik, einem anorganischen Glas, Kohlenstoff, Bor, Silicium, und/oder einen anorganische Fasern und/oder nicht faserigen Kohlenstoff und/oder Bornitrid enthaltenden Verbundwerkstoff mit Keramik- und/oder Kohlenstoffmatrix und/oder einem Verbundwerkstoff aus einem Metall und/oder einer Metalllegierung, das bzw. die wärmeleitende kohlenstoffhaltige und/oder Bornitrid-haltige Teilchen und/oder Fasern enthalten und zumindest teilweise mit einer Oxidschicht überzogen sein kann, oder deren Mischungen ausgewählt ist (nachstehend zusammenfassend als das erfindungsgemäße Oberflächenmaterial bezeichnet), vor dem Abtasten mit dem Laserstrahl nicht vorbehandelt oder gereinigt, obwohl dies nicht ausgeschlossen wird; z.B. kann die Oberfläche mit einem Lösungsmittel gereinigt werden. Auf keinen Fall wird sie jedoch wie in der EP 0 914 395 B1 beschrieben vor dem Abtasten mit einem Haftvermittler, wie beispielsweise einem Silanhaftvermittler, einem Titanat, wie Titatetraisopropylat oder Titanacetylacetonat, einem Zirconat, wie Zirconiumtetrabutylat, einem Zirconiumaluminat, einem Thiazol, einem Triazol, wie 1H-Benzotriazol, einem Phosphonat oder einem Sulfonat, zur Erhöhung der Haftfestigkeit an ein mit der Oberfläche zu verbindendes oder auf diese aufzubringendes Material behandelt. Auch nach dem Abtasten wird kein Haftvermittler, zur Erhöhung der Haftfestigkeit aufgetragen, bevor die Oberfläche mit einer anderen Oberfläche verbunden und/oder eine Beschichtung, wie ein Klebstoff, Lack, Lot, Knochenzement, Dichtmittel oder biologisches Gewebe und/oder eine sonstige Beschichtung, bei der es sich z.B. um einen Schutzüberzug, schmutzabweisenden oder Anti-Haftungsüberzug, Überzug zum Schutz vor chemischer oder Wärmeeinwirkung oder sonstigen funktionellen Überzug handeln kann, anhaften gelassen und/oder aufgebracht wird.

Die Keramik oder die Keramik der Keramikmatrix des Verbundwerkstoffes, aus der das erfindungsgemäße Oberflächenmaterial gebildet sein kann, kann aus allen bekannten Keramiken ausgewählt sein. Dazu gehören Silikatkeramiken, Oxidkeramiken, wie Aluminiumoxid, Siliciumdioxid, Aluminiumoxid-Siliciumdioxid (Mullit), SiOC, Berylliumoxid, Zirconium(IV)oxid und Aluminiumtitanat und Gemische derselben, wie $Al_2O_3$-$SiO_2$/SiOC, nichtoxidische Keramiken, wie Siliciumcarbid, Woframcarbid, Siliciumnitrid, Bornitrid, Aluminiumnitrid, SiCN und Molybdändisilicid, Glaskeramiken, Porzellan und Keramiken aus Kombinationen der vorstehenden Keramiken.

Das erfindungsgemäße Keramik-Oberflächenmaterial kann auch ein Keramiküberzug sein.

Weitere Keramikmaterialien (ohne Anspruch auf Vollständigkeit), die insbesondere, aber nicht nur, als Überzüge verwendet werden, sind die Carbide $B_4C$, TiC, TaC, HfC, ZrC, $Cr_3C_2$, $Al_4C_3$, MoC2, NbC und VC, die Nitride TiN, $CrN_{1-x}$, CrN, $Li_3N$. TaN, und ZrN, die Silicide $WSi_2$ und $ZrSi_2$, die Boride $ZrB_2$, $HfB_2$, $TiB_2$, $LaB_6$, $Cr_B$, $CrB_2$, $AlB_2$, $MgB_2$ und $SiB_6$ und die Oxide CaO, MgO, $ThO_2$, $TiO_2$, $P_2O_5$, SiAlON, $Y_2O_3$, $HfO_2$, $ZrO_2$ und $B_2O_3$.

Bei dem anorganischen Glas, das das erfindungsgemäße Oberflächenmaterial bilden kann, kann es sich um jedes Glas handeln. Beispiele sind Quarzglas, Borosilikatglas, Kalk-Natron-Glas und Bleikristallglas, um nur einige zu nennen.

Bei dem Kohlenstoff oder dem Kohlenstoff der Kohlenstoffmatrix des Verbundwerkstoffes, aus dem das erfindungsgemäße Oberflächenmaterial gebildet sein kann, handelt es sich in der Regel um härtere Kohlenstoffvarianten, wie glasartigen Kohlenstoff, diamantartigen Kohlenstoff, pyrolytisch hergestellten Graphit oder durch Dampfabscheidung oder chemische Dampfabscheidung (vapor deposition oder chemical vapor deposition) hergestellten Kohlenstoff.

Erfindungsgemäße Oberflächen können auch die Halbmetalle Bor und Silicium umfassen.

Die Verbundwerkstoffe, die das erfindungsgemäße Oberflächenmaterial bilden können, können auch als Mischungen vorliegen,
Bei ihnen kann es sich um anorganische Fasern enthaltende (faserverstärkte) Verbundwerkstoffe mit den oben genannten Matrices handeln.

Bei den Verbundwerkstoff-Fasern kann es ich um alle anorganischen Fasern handeln, die der Fachmann für den Einsatz in Verbundwerkstoffen kennt. Dazu zählen insbesondere Carbonfasern, Glasfasern und Keramikfasern. Die Fasern können kurz oder lang sein und können zu Rovings (Multifilamenten) verbunden sein.

Besonders bevorzugte Keramikfasern basieren auf Oxidkeramikfilament-Fasern, insbesondere $Al_2O_3$- oder $Al_2O_3$/$SiO_2$ (Mullit)-Faser und/oder Nicht-Oxidkeramikfilament-Fasern, insbesondere SiC-, SiCN- und SiBNC-Faserarten.

Häufig sind die anorganischen Fasern in den faserverstärkten Verbundwerkstoffen beschichtet, um eine schwache Faser-Matrix-Grenzflächenwechselwirkung zu gewährleisten. Das ist in der Regel für ein gutes mechanisches Verhalten erforderlich. Derartige Beschichtungen können z.B. aus pyrolytischem Kohlenstoff, sowie für einen Faserschutz erforderlich. Derartige Beschichtungen können z.B. aus pyrolytischem Kohlenstoff, SiC, BN, $LaPO_4$, $CePO_4$, $CaWo_4$, $ZrO_2$, Mullit, $Al_2O_3$, Magnetoplumbiten, $\alpha$-Aluminat-Strukturen, $LaAl_{11}O_{18}$, $CaAl_{12}O_{19}$, $BaMg_2Al_{16}$,$O_{27}$, $KMg_2Al_{15}O_{25}$, Lanthan- und Calciumhexaaluminaten, Hexaaluminaten, organo-metallischen Verbindungen oder Gemischen und/oder Multilayer daraus ausgewählt sein.

Die faserverstärkten Verbundwerkstoffe können noch zusätzliche inerte oder passive Füllstoffe enthalten, z.B. Metallpulver und/oder Keramikpulver, das nicht mit der Keramikmatrix, falls verwendet, verbunden ist.

Unter nicht faserigen Kohlenstoff und/oder Bornitrid enthaltenden Verbundwerkstoffen mit Keramik- und/oder Kohlenstoffmatrix, aus denen das erfindungsgemäße Oberflächenmaterial gebildet sein kann, versteht man Keramik- oder Kohlenstoffmatrices, die mit kohlenstoffartigen Teilchen außer Carbonfasern versehen sind. Zu diesen kohlenstoffhaltigen Teilchen gehören insbesondere graphitartige Teilchen, Kohlenstoff-Nanoröhrchen, Fullerene und diamantartige Teilchen. Bei dem Bornitrid handelt es sich bevorzugt um Teilchen aus kubischem Bornitrid.

Bei einem weiteren Verbundwerkstoff, aus dem das erfindungsgemäße Oberflächenmaterial gebildet sein kann, handelt es sich um Metalle und/oder Metalllegierungen, die wärmeleitende kohlenstoffhaltige und/oder Bornitrid-haltige Teilchen und/oder anorganische Fasern enthalten und zumindest teilweise mit einer Oxidschicht überzogen sein können. Bei diesen Fasern und Teilchen kann es sich insbesondere um Carbonfasern, graphitartige Teilchen, Kohlenstoff-Nanoröhrchen, diamantartige Teilchen, Fasern aus Bornitrid und Teilchen aus kubischem Bornitrid handeln.

Auch mit Metall modifizierte Keramiken, also Metall-Keramik-Verbundwerkstoffe, können das erfindungsgemäße Material bilden.

Der Werte von $\varepsilon$, die sich aus den Parametern der oben angegebenen Gleichung ergeben müssen, damit die erfindungsgemäß angestrebte Oberflächenstrukturierung erzeugt wird, liegen bevorzugt bei etwa 0,07 oder etwa $0,1 \leq \varepsilon \leq$ etwa 2300 oder etwa 2000, mehr bevorzugt bei etwa $0,1 \leq \varepsilon \leq$ etwa 1700 oder etwa 1500.

Im Folgenden werden bevorzugte Parameter des Verfahrens der Erfindung angegeben. Es muss betont werden, dass alle Parameter unabhängig voneinander variiert werden können.

Der Druck liegt im Allgemeinen im Bereich von etwa 0 bar (wenn im Vakuum gearbeitet wird) oder von mehr als 0 bar bis etwa 15 bar (wenn in einer Gasatmosphäre gearbeitet wird) und die Temperatur im Bereich von etwa -50°C bis etwa 350°C. Dies sind Temperaturen, die außerhalb des Laserstrahls vorherrschen. Im Laserstrahl können natürlich wesentlich höhere Temperaturen entstehen.

Die Impulslänge der Laserimpulse t beträgt vorzugsweise etwa 0,1 ns bis etwa 2000 ns, mehr bevorzugt etwa 0,1 bis etwa 900 ns oder 800 ns, manchmal auch etwa 5 ns bis etwa 200 ns.

Die Impulsspitzenleistung der austretenden Laserstrahlung $P_p$ beträgt vorzugsweise etwa 1 kW bis etwa 1800 kW, mehr bevorzugt etwa 3 kW bis etwa 650 kW.

Die mittlere Leistung der austretenden Laserstrahlung $P_m$ beträgt vorzugsweise etwa 5 W bis etwa 28000 W, mehr bevorzugt etwa 20 W bis etwa 9500 W.

Die Repetitionsrate der Laserimpulse f beträgt vorzugsweise etwa 10 kHz bis etwa 3000 kHz, mehr bevorzugt etwa 10 kHz bis etwa 950 kHz.

Die Abtastgeschwindigkeit an der Werkstückoberfläche v beträgt vorzugsweise etwa 30 mm/s bis etwa 19000 mm/s, mehr bevorzugt etwa 200 mm/s bis etwa 9000 mm/s.

Der Durchmesser des Laserstrahls am Werkstück d beträgt vorzugsweise etwa 20 $\mu$m bis etwa 4500 $\mu$m, mehr bevorzugt etwa 50 $\mu$m bis etwa 3500 $\mu$m.

Die Laserwellenlänge $\lambda$ kann etwa 100 nm bis etwa 11000 nm betragen. Als Laser können z.B. Festkörperlaser, wie z.B. Nd:YAG ($\lambda$ = 1064 nm oder 533 nm oder 266 nm), Nd:YVO$_4$ ($\lambda$ = 1064 nm), Diodenlaser mit z.B. $\lambda$ = 808 nm, Gaslaser, wie z.B. Excimer-Laser, mit z.B. KrF ($\lambda$ = 248 nm) oder H$_2$ ($\lambda$ = 123 nm bzw. 116 nm) oder ein CO$_2$-Laser (10600 nm) benutzt werden.

Der Schmelzpunkt oder die Zersetzungstemperatur $T_L$ bei Normaldruck, die spezifische Wärmekapazität $c_p$ bei Normalbedingungen, die spezifische Wärmeleitfähigkeit $\kappa$ bei Normalbedingungen und die Absorption der Laser-strahlung des bestrahlten Material $\alpha$ bei Normalbedingungen, die in den oben erwähnten Ausdruck für $\varepsilon$ einzusetzen sind, sind demnach einfach Materialeigenschaften der behandelten Materialien.

Bei Materialien, die nur unter Zersetzung schmelzen oder sich ohne zu schmelzen ab einer bestimmten Temperatur zersetzen, bedeutet $T_L$ die Zersetzungstemperatur des Materials.

Es sollte noch erwähnt werden, dass naturgemäß nur solche Oberflächenbereiche behandelt werden können, die von einem Laserlicht erreicht werden können. Bereiche, die vollständig "im Schatten" (z.B. bei hinterschnittenen Geometrien) liegen, können auf die hierin beschriebene Weise nicht strukturiert werden.

Es wird geglaubt - jedoch ohne dass man an eine Theorie gebunden sein will - dass der Mechanismus der Oberflächenstrukturierung ein partielles Verdampfen, Kondensieren und Erstarren des behandelten Materials an der Oberfläche sowie ein Wiedererstarren von geschmolzenem Substratmaterial beinhaltet. Die verdampfte Menge des Materials sowie der Bereich, indem das Material schmilzt, dürften von der Intensität des Lichtes an jeder einzelnen Stelle der Oberfläche abhängen. Bei einer oxidhaltigen Oberfläche ist es denkbar, dass unter dem Laserlicht zunächst Sauerstoff von der Oberfläche abdampft, wobei er sich dann beim Abkühlen wieder mit der Oberfläche verbinden würde. Auch das bloße Schmelzen und Wiedererstarren des Materials an der Oberfläche oder das boße Verdampfen könnte zu einer dendritischen, offenporigen, zerklüfteten, und/oder fraktalartigen Struktur führen.

Bei der Atmosphäre, in der gearbeitet wird, kann es sich um Vakuum oder ein gegenüber der Oberfläche unter den Verfahrensbedingungen inertes Gas oder Gasgemisch handeln, wie ein Edelgas, z.B. Argon, Helium oder Neon, oder in vielen Fällen auch Stickstoff, Luft oder $CO_2$, oder ein Gemisch derselben, wobei der Druck im Allgemeinen im Bereich von etwa 0 bar, wenn im Vakuum gearbeitet wird, oder von mehr als 0 bar, z.B. 0,001 mbar, bis etwa 15 bar, wenn in einer Atmosphäre aus einem Gas oder Gasgemisch gearbeitet wird, liegt und die Temperatur außerhalb des Laserstrahls im Bereich von etwa -50°C bis etwa 350°C liegt. Die Atmosphäre wird also so ausgewählt, dass sie insbesondere gegenüber dem erfindungsgemäßen Oberflächenmaterial unter den Arbeitsbedingungen von Druck und Temperatur inert ist, das heißt keine Reaktion mit dem Oberflächenmaterial eingeht. Dabei kann es sich in vielen Fällen zum Beispiel um Umgebungsatmosphäre bei Umgebungsdruck und -temperatur handeln, was bevorzugt wird, wenn es die gegebene Oberfläche zulässt. Der Fachmann weiß, unter welchen Bedingungen ein gegebenes Oberflächenmaterial inert ist und/oder kann dies durch geeignete Analyseverfahren, wie X-Ray Photoelectron Spectroscopy (XPS), EDX (energy dispersive X-ray analysis), FTIR-Spektroskopie, Time of Flight Secondary Ion Mass Spectrometry (TOF-SIMS), EELS (electron energy loss spectroscopy), HAADF (high angle annular dark field) oder NIR (near infrared spectroscopy) in Erfahrung bringen.

Die erfindungsgemäß erzeugten und die oben beschriebenen Nanostrukturen aufweisenden Oberflächen sorgen für eine ausgezeichnete Haftung von Klebstoffen, Lacken und sonstigen Beschichtungen. Wenn auf mindestens einem Werkstück mit einer Oberfläche, die erfindungsgemäßes Oberflächenmaterial umfasst, erfindungsgemäß Nanostrukturen erzeugt worden sind, können zwei derartige Werkstücke oder ein derartiges Werkstück mit einem mit einem Werkstück mit einer Oberfläche aus einem anderen Werkstoff durch bloßes Fügen unter erhöhtem Druck bei Raumtemperatur oder bei erhöhten Temperaturen mit zufriedenstellender Haftung miteinander verbunden werden.

Die Nanostrukturierung der erfindungsgemäßen Oberflächen kann aber auch für andere Zwecke als die Verbesserung der Haftung erfolgen. Allgemein können mit ihr Änderungen der physikalischen und/oder chemischen Wechselwirkung der Oberfläche mit Licht oder Materie erzielt werden. Zum Beispiel kann die Nanostrukturierung mit einer Veränderung der Farbe oder Emissivität oder elektrischen Leitfähigkeit oder Korrosionspotential der Oberfläche einhergehen. Die starke Erhöhung der Oberfläche sowie die Bildung von schmalen Graten enthaltenden Oberflächenstrukturen durch die Nanostrukturierung kann auch eine starke Erhöhung von katalytischen Wirkungen der Oberfläche selbst oder einer dünnen und/oder nanoskaligen Beschichtung auf derselben zur Folge haben, da heterogene Katalyse bekanntlich ein Oberflächenphänomen ist. Auch rein physikalische Phänomene, wie die Erhöhung der Zahl der Punkte, an denen sich Kristallkeime oder Blasenkeime bilden können, können genutzt werden. Ein Beispiel aus dem Alltag wäre ein Bier- oder Sektglas oder eine Cappuccino-Tasse mit nanostrukturierter Oberfläche, das bzw. die zu einem verbesserten Aufschäumverhalten des Getränks führt.

Ein Bespiel für besonders bevorzugte Werkstücke mit erfindungsgemäß hergestellter Oberfläche sind Keramik- oder Keramikverbundstoffprothesen und Keramik- oder Keramikverbundstoffimplantate. Ihre nanostrukturierte Oberflächen sorgen dafür, dass die biologischen Materialien im Körper, mit denen sie verwachsen sollen, hervorragend an den Oberflächen haften.

Die Verwendung eines Werkstücks mit erfindungsgemäß hergestellter Oberfläche beim Beschichten des Werkstücks mit einem gleichartigen oder verschiedenen Material mit oder ohne Klebstoff ist ein weiterer Aspekt der Erfindung. Bei der Beschichtung kann es sich um jede beliebige geeignete Beschichtung für ein erfindungsgemäßes Oberflächenmaterial handeln und sie kann durch jegliche geeignete Weise aufgebracht werden. Als ausgewählte Beispiele werden Lote, durch thermisches und nicht-thermisches Spritzen aufgebrachte Beschichtungen, Beschichtungen über Nasschemie oder Gasphase (z.B. PVD), Beschichtungen mit glasartigen Materialien, Keramiken und organische Materialien, einschließlich biologischer Materialien oder biologischen Gewebes, die gegebenenfalls direkt auf der erfindungsgemäß hergestellten Oberfläche erzeugt werden, genannt.

Die folgenden Beispiele erläutern die Erfindung, ohne sie zu beschränken.

**Beispiele**

In den Ausführungsbeispielen 1 - 6 werden die Faserverbundwerkstoffe aus Tabelle 1 verwendet. Einige Versuche wurden bei Umgebungsatmosphäre, Umgebungsdruck und Umgebungstemperatur durchgeführt, einige in Argonatmosphäre bei Umgebungsdruck und Umgebungstemperatur.

Tabelle 1: Übersicht über die in den Beispielen 1 -6 verwendeten keramischen Faserverbundwerkstoffe

| Beispiel | CMC Werkstofftyp | Faserarchitektur | Fasertyp | Matrix | Herstellprozess | Schutzschicht |
|---|---|---|---|---|---|---|
| 1 | C/SiC | 2D - 0/90° | C | SiC | PIP | - |
| 2 | C/C | 3D - QI | C | C | Rapid-CVI | - |
| 3 | C/C | 3D - QI | C | C | Rapid-CVI | - |
| 4 | C/SiC beschichtet | 2D - 20°/70° | C | SiC | PIP | $200\mu$m CVD-SiC |
| 5 | Ox/Ox | 2D - QI | $Al_2O_3$ | $Al_2O_3$-$SiO_2$/SiOC | PIP | - |
| 6 | Ox/Ox | 2D - 0/90° | $Al_2O_3$ | $Al_2O_3$-$SiO_2$ | CSI | - |

### Beispiel 1

Die **Figuren 1(a) und 1(b)** zeigen eine unbehandelte C/SiC-Oberfläche (s. Tab. 1) in zwei Vergrößerungen. Es sind auf beiden Vergrößerungen Matrix und darunter liegende bzw. freiliegende Fasern zu erkennen.

### Verfahren 1A

Diese C/SiC-Oberfläche wurde ohne irgendeine Vorbehandlung zweimal mit einem diodengepumpten Nd:YAG Laser der Wellenlänge $\lambda$: 1064 nm bei Umgebungsatmosphäre, Umgebungsdruck und Umgebungstemperatur abgetastet.

Die Verfahrensparameter waren im Einzelnen:

$\lambda$: 1064 nm, $P_p$: 86 kW; $P_m$: 11,5 W; t: 13 ns; f: 10 kHz; v: 800 mm/s; d: 80 $\mu$m; $\alpha$: 60 %; $T_L$: 3823 K; $c_p$: 750 J/kgK; $\kappa$: 100 W/mK.

Daraus ergibt sich $\varepsilon$ **= 54,3,** d.h. $\varepsilon$ liegt im erfindungsgemäßen Bereich.

Die auf der Faser des C/SiC-Verbundstoffs erzeugte Oberflächenstruktur ist in der REM-Aufnahme der **Figur 2** gezeigt.

### Verfahren 1B

Die C/SiC Oberfläche aus Figur 1 wurde ohne irgendeine Vorbehandlung einmal mit einem diodengepumpten Nd:YAG Laser der Wellenlänge $\lambda$: 533 nm bei Umgebungsatmosphäre, Umgebungsdruck und Umgebungstemperatur abgetastet.

Die Verfahrensparameter waren im Einzelnen:

$\lambda$: 533 nm, $P_p$: 68 kW; $P_m$: 77 W; t: 57 ns; f: 20 kHz; v: 100 mm/s; d: 80 $\mu$m; $\alpha$: 75 %; $T_L$: 2673 K; $c_p$: 900 J/kgK; $\kappa$: 70 W/mK.

Daraus ergibt sich $\varepsilon$ **= 1677,** d.h. $\varepsilon$ liegt im erfindungsgemäßen Bereich.

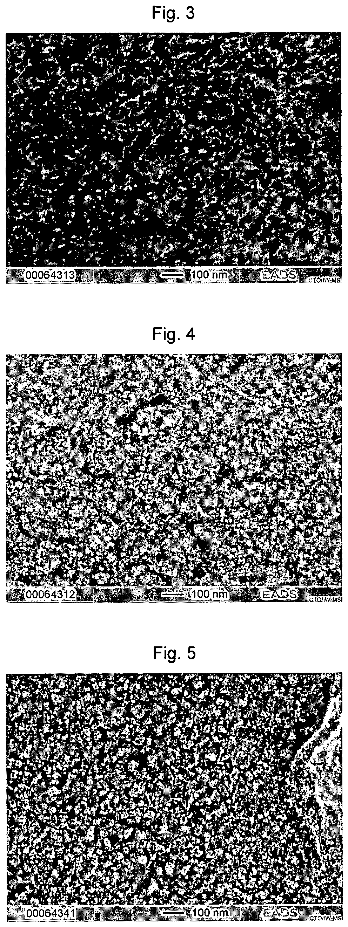

Die auf der Matrix erzeugte Oberflächenstruktur ist in der REM-Aufnahme der **Figur 3** gezeigt.

### Verfahren 1C

Die C/SiC Oberfläche aus Figur 1 wurde ohne irgendeine Vorbehandlung einmal mit einem diodengepumpten Nd:YAG Laser der Wellenlänge $\lambda$: 266 nm in Argonatmosphäre bei Umgebungsdruck und Umgebungstemperatur abgetastet.

Die Verfahrensparameter waren im Einzelnen:

$\lambda$: 266 nm, $P_p$: 16 kW; $P_m$: 88 W; t: 140 ns; f: 40 kHz; v: 60 mm/s; d: 40 $\mu$m; $\alpha$: 90 %; $T_L$: 2673 K; $c_p$: 900 J/kgK; $\kappa$: 70 W/mK.

Daraus ergibt sich $\varepsilon$ **= 2730,** d.h. $\varepsilon$ liegt im erfindungsgemäßen Bereich, nahe der oberen Grenze (3000).

Die auf der Matrix erzeugte Oberflächenstruktur ist in der REM-Aufnahme der **Figur 4** gezeigt.

### Vergleichsverfahren 1D

Die C/SiC Oberfläche aus Figur 1 wurde ohne irgendeine Vorbehandlung einmal mit einem diodengepumpten Nd:YAG Laser der Wellenlänge $\lambda$: 1064 nm bei Umgebungsatmosphäre, Umgebungsdruck und Umgebungstemperatur abgetastet.

Die Verfahrensparameter waren im Einzelnen:

$\lambda$: 1064 nm, $P_p$: 172 kW; $P_m$: 149 W; t: 29 ns; f: 30 kHz; v: 700 mm/s; d: 80 $\mu$m; $\alpha$: 60 %; $T_L$: 3823 K; $c_p$: 750 J/kgK; $\kappa$: 100 W/mK.

Daraus ergibt sich $\varepsilon$ **= 3742,** d.h. $\varepsilon$ liegt nicht im erfindungsgemäßen Bereich (> 3000).

In der REM-Aufnahme der **Figur 5** ist zu sehen, dass sich keine Struktur gemäß der Erfindung auf der Oberfläche der Faser gebildet hat.

### Vergleichsverfahren 1E

Die C/SiC Oberfläche aus Figur 1 wurde ohne irgendeine Vorbehandlung einmal mit einem diodengepumpten Nd:YAG Laser der Wellenlänge $\lambda$: 1064 nm in Argonatmosphäre bei Umgebungsdruck und Umgebungstemperatur abgetastet.

Die Verfahrensparameter waren im Einzelnen:

$\lambda$: 1064 nm, $P_p$: 150 kW; $P_m$: 232 W; t: 31 ns; f: 50 kHz; v: 800 mm/s; d: 80 $\mu$m; $\alpha$: 60 %; $T_L$: 2673 K; $c_p$: 900 J/kgK; $\kappa$: 70 W/mK.

Daraus ergibt sich $\varepsilon$ **= 5229,** d.h. $\varepsilon$ liegt nicht im erfindungsgemäßen Bereich (> 3000).

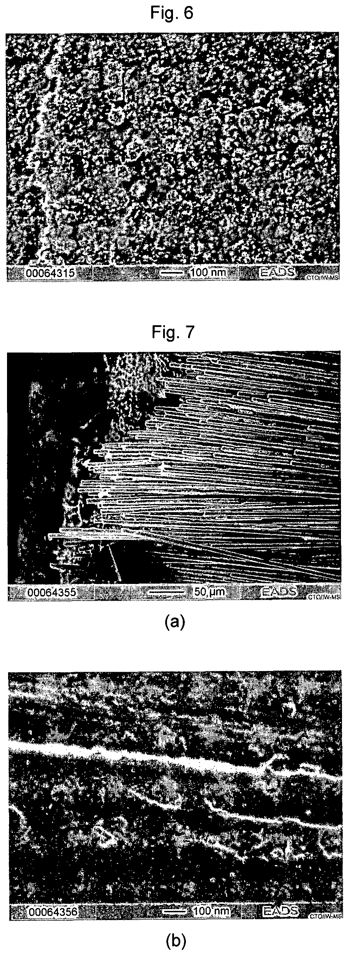

in der REM-Aufnahme der **Figur 6** ist zu sehen, dass sich keine Struktur gemäß der Erfindung auf der Oberfläche der Matrix gebildet hat.

### Beispiel 2

Die **Figuren 7(a) und 7(b)** zeigen eine unbehandelte Oberfläche eines C/C-Verbunds (s. Tab 1) in zwei Vergrößerungen. Es sind freiliegende Fasern und Matrix zu erkennen.

### Verfahren 2A

Die C/C Oberfläche aus Figur 7 wurde ohne irgendeine Vorbehandlung einmal mit einem diodengepumpten Nd:YAG Laser der Wellenlänge $\lambda$: 1064 nm bei Umgebungsatmosphäre, Umgebungsdruck und Umgebungstemperatur abgetastet.

Die Verfahrensparameter waren im Einzelnen:

$\lambda$: 1064 nm, $P_p$: 70 kW; $P_m$: 10 W; t: 17 ns; f: 10 kHz; v: 3000 mm/s; d: 800 $\mu$m; $\alpha$: 60 %; $T_L$: 3823 K; $c_p$: 780 J/kgK; $\kappa$: 100 W/mK.

Daraus ergibt sich $\varepsilon$ **= 0,19,** d.h. $\varepsilon$ liegt im erfindungsgemäßen Bereich, nahe an der unteren Grenze (0,07).

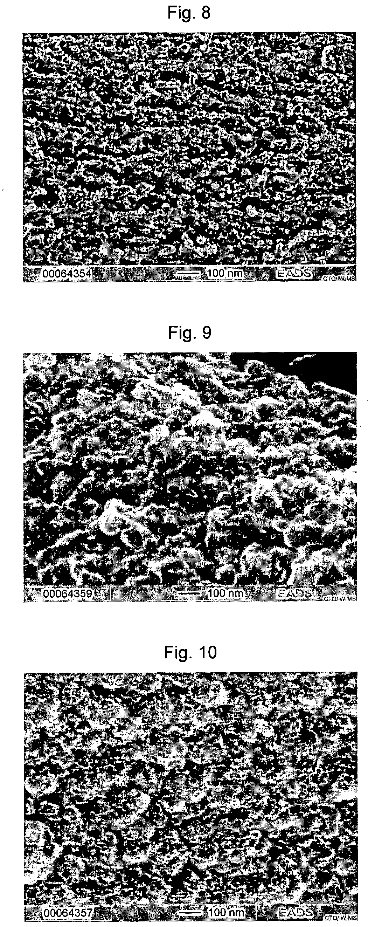

Die auf der Faser erzeugte Oberflächenstruktur ist in der REM-Aufnahme der **Figur 8** gezeigt.

### Verfahren 2B

Die C/C Oberfläche aus Figur 7 wurde ohne irgendeine Vorbehandlung einmal mit einem diodengepumpten Nd:YAG Laser der Wellenlänge $\lambda$: 1064 nm in Argonatmosphäre bei Umgebungsdruck und Umgebungstemperatur abgetastet.

Die Verfahrensparameter waren im Einzelnen:

$\lambda$: 1064 nm, $P_p$: 70 kW; $P_m$: 10 W; t: 17 ns; f: 10 kHz; v: 1000 mm/s; d: 250 $\mu$m; $\alpha$: 60 %; $T_L$: 3823 K; $c_p$: 700 J/kgK; $\kappa$: 30 W/mK.

Daraus ergibt sich $\varepsilon$ **= 1,99,** d.h. $\varepsilon$ liegt im erfindungsgemäßen Bereich.

Die auf der Matrix erzeugte Oberflächenstruktur ist in der REM-Aufnahme der **Figur 9** gezeigt.

### Verfahren 2C

Die C/C Oberfläche aus Figur 7 wurde ohne irgendeine Vorbehandlung einmal mit einem diodengepumpten Nd:YAG Laser der Wellenlänge $\lambda$: 266 nm bei Umgebungsatmosphäre, Umgebungsdruck und Umgebungstemperatur abgetastet.

Die Verfahrensparameter waren im Einzelnen für die Matrix des C/C-Verbunds: $\lambda$: 266 nm, $P_p$: 16 kW; $P_m$: 88 W; t: 140 ns; f: 40 kHz; v: 100 mm/s; d: 45 $\mu$m; $\alpha$: 90 %; $T_L$: 3823 K; $c_p$: 700 J/kgK; $\kappa$: 30 W/mK.

Daraus ergibt sich $\varepsilon$ **= 1037,** d.h. $\varepsilon$ liegt im erfindungsgemäßen Bereich.

Die auf der Matrix erzeugte Oberflächenstruktur ist in der REM-Aufnahme der **Figur 10** gezeigt.

### Beispiel 3

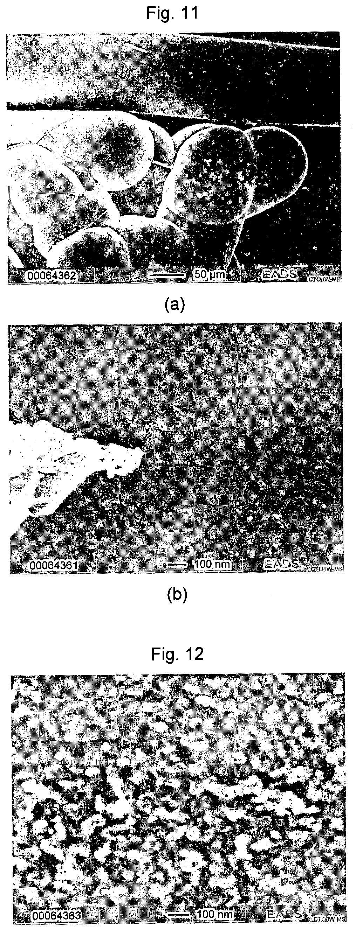

Die **Figuren 11(a) und 11(b)** zeigen eine unbehandelte Oberfläche eines C/C-Verbunds (s. Tab 1) in zwei Vergrößerungen. Es sind mit Kohlenstoffmatrix umgebene freiliegende Fasern zu erkennen.

Die C/C Oberfläche aus Figur 11 wurde ohne irgendeine Vorbehandlung einmal mit einem gepulsten $CO_2$-Laser der Wellenlänge $\lambda$: 10600 nm bei Umgebungsatmosphäre, Umgebungsdruck und Umgebungstemperatur abgetastet.

Die Verfahrensparameter waren im Einzelnen:

$\lambda$: 10600 nm, $P_p$: 19 kW; $P_m$: 140 W; t: 370 ns; f: 20 kHz; v: 100 mm/s; d: 1500 $\mu$m; $\alpha$: 50 %; $T_L$: 3823 K; $c_p$: 780 J/kgK; $\kappa$: 100 W/mK.

Daraus ergibt sich $\varepsilon$ **= 0,21,** d.h. $\varepsilon$ liegt im erfindungsgemäßen Bereich, nahe an der unteren Grenze (0,07).

Die auf der beschichteten Faser erzeugte Oberflächenstruktur ist in der REM-Aufnahme der **Figur 12** gezeigt.

### Beispiel 4

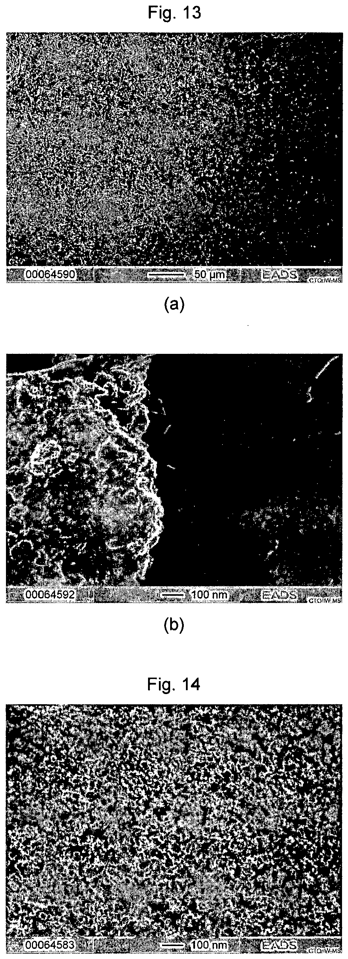

Die **Figuren 13(a) und 13(b)** zeigen eine unbehandelte Oberfläche eines SiC-beschichteten C/SiC-Verbunds (s. Tab 1) in zwei Vergrößerungen. Es ist die Beschichtung (SiC, s. Tab 1) auf der Matrix zu erkennen

**Verfahren 4A**

Die beschichtete C/SiC Oberfläche aus Figur 13 wurde ohne irgendeine Vorbehandlung einmal mit einem diodengepumpten Nd:YAG Laser der Wellenlänge $\lambda$: 1064 nm bei Umgebungsatmosphäre, Umgebungsdruck und Umgebungstemperatur abgetastet.
Die Verfahrensparameter waren im Einzelnen:
$\lambda$: 1064 nm, $P_p$: 115 kW; $P_m$: 14 W; t: 17 ns; f: 12,5 kHz; v: 800 mm/s; d: 125 $\mu$m; $\alpha$: 75 %; $T_L$: 2773 K; $c_p$: 980 J/kgK; $\kappa$: 3 W/mK.
Daraus ergibt sich $\varepsilon$ **= 13,9,** d.h. $\varepsilon$ liegt im erfindungsgemäßen Bereich.
Die auf der SiC-beschichteten Matrix erzeugte Oberflächenstruktur ist in der REM-Aufnahme der **Figur 14** gezeigt.

**Verfahren 4B**

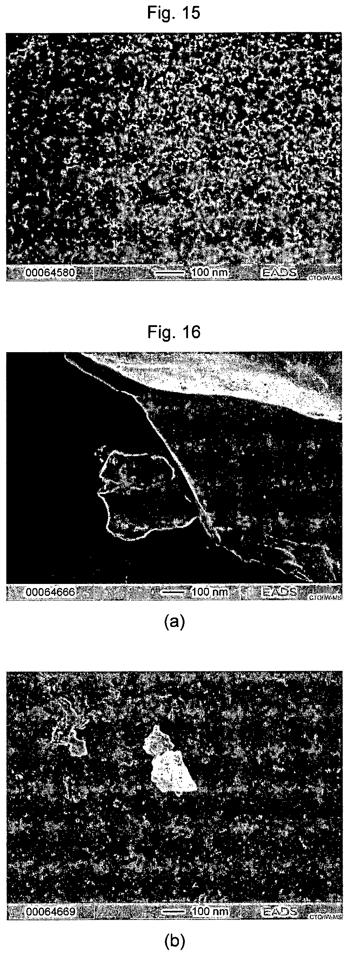

Die beschichtete C/SiC Oberfläche aus Figur 13 wurde ohne irgendeine Vorbehandlung einmal mit einem diodengepumpten Nd:YAG Laser der Wellenlänge $\lambda$: 1064 nm bei Umgebungsatmosphäre, Umgebungsdruck und Umgebungstemperatur abgetastet.
Die Verfahrensparameter waren im Einzelnen:
$\lambda$: 1064 nm, $P_p$: 30 kW; $P_m$: 198 W; t: 66 ns; f: 100 kHz; v: 200 mm/s; d: 60 $\mu$m; $\alpha$: 65 %; $T_L$: 2773 K; $c_p$: 980 J/kgK; $\kappa$: 3 W/mK.
Daraus ergibt sich $\varepsilon$ **= 423,1,** d.h. $\varepsilon$ liegt im erfindungsgemäßen Bereich.
Die auf der beschichteten Matrix erzeugte Oberflächenstruktur ist in der REM-Aufnahme der **Figur 15** gezeigt.

### Beispiel 5

Die **Figuren 16(a) und 16(b)** zeigen eine unbehandelte Oberfläche eines Oxidkeramische Faser/Oxidkeramische Matrix-Verbunds (Ox/Ox) (s. Tab 1) in zwei Vergrößerungen. Es ist die Matrix zu erkennen.

**Verfahren A**

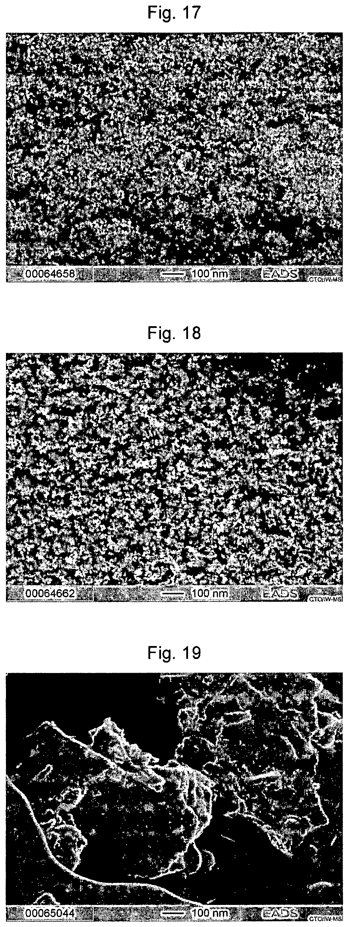

Die Ox/Ox Oberfläche aus Figur 16 wurde ohne irgendeine Vorbehandlung zweimal mit einem diodengepumpten Nd:YAG Laser der Wellenlänge $\lambda$: 1064 nm bei Umgebungsatmosphäre, Umgebungsdruck und Umgebungstemperatur abgetastet.
Die Verfahrensparameter waren im Einzelnen:
$\lambda$: 1064 nm, $P_p$: 38 kW; $P_m$: 6 W; t: 17 ns; f: 10 kHz; v: 800 mm/s; d: 80 $\mu$m; $\alpha$: 60 %; $T_L$: 2023 K; $c_p$: 950 J/kgK; $\kappa$: 4 W/mK.
Daraus ergibt sich $\varepsilon$ **= 2,1,** d.h. $\varepsilon$ liegt im erfindungsgemäßen Bereich.
Die auf der Matrix erzeugte Oberflächenstruktur ist in der REM-Aufnahme der **Figur 17** gezeigt.

**Verfahren B**

Die Ox/Ox-Oberfläche aus Figur 16 wurde ohne irgendeine Vorbehandlung einmal mit einem diodengepumpten Nd:YAG Laser der Wellenlänge $\lambda$: 1064 nm bei Umgebungsatmosphäre, Umgebungsdruck und Umgebungstemperatur abgetastet.
Die Verfahrensparameter waren im Einzelnen:
$\lambda$: 1064 nm, $P_p$: 86 kW; $P_m$: 11,5 W; t: 13 ns; f: 10 kHz; v: 200 mm/s; d: 60 $\mu$m; $\alpha$: 60 %; $T_L$: 2023 K; $c_p$: 950 J/kgK; $\kappa$: 4 W/mK.
Daraus ergibt sich $\varepsilon$ **= 47,1,** d.h. $\varepsilon$ liegt im erfindungsgemäßen Bereich.
Die auf der Matrix erzeugte Oberflächenstruktur ist in der REM-Aufnahme der **Figur 18** gezeigt.

### Beispiel 6

**Figur 19** zeigt eine unbehandelte Oberfläche eines oxidkeramische Faser/oxidkeramische Matrix-Verbunds (s. Tab 1). Es ist die Matrix zu erkennen.

**Vergleichsverfahren A**

Die Ox/Ox-Oberfläche aus Figur 19 wurde ohne irgendeine Vorbehandlung einmal mit einem diodengepumpten Nd:YAG Laser der Wellenlänge $\lambda$: 1064 nm bei Umgebungsatmosphäre, Umgebungsdruck und Umgebungstemperatur abgetastet.
Die Verfahrensparameter waren im Einzelnen:

$\lambda$: 1064 nm, $P_p$: 115 kW; $P_m$: 14 W; t: 17 ns; f: 12,5 kHz; v: 3000 mm/s; d: 1400 $\mu$m; $\alpha$: 60 %; $T_L$: 2123 K; $c_p$: 1000 J/kgK; $\kappa$: 3 W/mK.

Daraus ergibt sich $\varepsilon$ **= 0,05,** d.h. $\varepsilon$ liegt nicht im erfindungsgemäßen Bereich (knapp < 0,07).

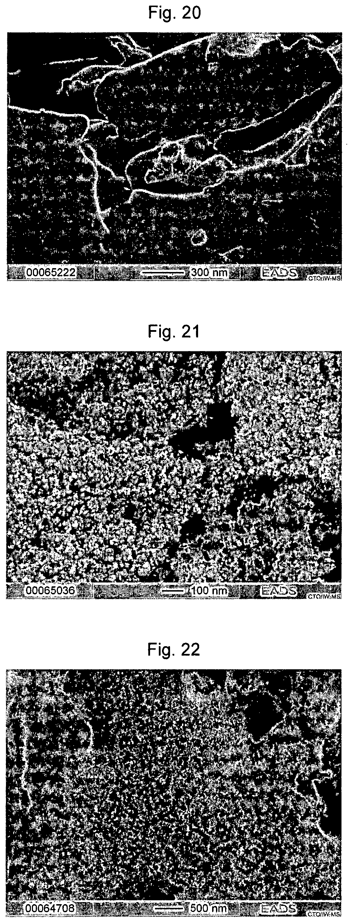

In der REM-Aufnahme der **Figur 20** ist zu sehen, dass sich keine Struktur gemäß der Erfindung auf der Oberfläche gebildet hat.

### Verfahren B

Die Ox/Ox-Oberfläche aus Figur 19 wurde ohne irgendeine Vorbehandlung einmal mit einem diodengepumpten Nd:YAG Laser der Wellenlänge $\lambda$: 1064 nm in Argonatmosphäre bei Umgebungsdruck und Umgebungstemperatur abgetastet.

Die Verfahrensparameter waren im Einzelnen:

$\lambda$: 1064 nm, $P_p$: 86 kW; $P_m$: 11,5 W; t: 13 ns; f: 10 kHz; v: 400 mm/s; d: 80 $\mu$m; $\alpha$: 60 %; $T_L$: 2123 K; $c_p$: 1000 J/kgK; $\kappa$: 3 W/mK.

Daraus ergibt sich $\varepsilon$ **= 15,5,** d.h. $\varepsilon$ liegt im erfindungsgemäßen Bereich.

Die auf der Matrix erzeugte Oberflächenstruktur ist in der REM-Aufnahme der **Figur 21** gezeigt.

### Verfahren C

Die Ox/Ox-Oberfläche aus Figur 19 wurde ohne irgendeine Vorbehandlung einmal mit einem diodengepumpten Nd:YAG Laser der Wellenlänge $\lambda$: 533 nm bei Umgebungsatmosphäre, Umgebungsdruck und Umgebungstemperatur abgetastet.

Die Verfahrensparameter waren im Einzelnen für die Matrix des Ox/Ox-Verbunds: $\lambda$: 533 nm, $P_p$: 144 kW; $P_m$: 95 W; t: 33 ns; f: 20 kHz; v: 50 mm/s; d: 60 $\mu$m; $\alpha$: 80 %; $T_L$: 2123 K; $c_p$: 1000 J/kgK; $\kappa$: 3 W/mK.

Daraus ergibt sich $\varepsilon$ **= 3758,** d.h. $\varepsilon$ liegt nicht im erfindungsgemäßen Bereich (> 3000).

In der REM-Aufnahme der **Figur 22** ist zu sehen, dass sich keine Struktur gemäß der Erfindung auf der Oberfläche gebildet hat.

### Patentansprüche

**1.** Verfahren zur Erzeugung einer Oberfläche eines Werkstücks, welche Oberflächenstrukturen mit Abmessungen im Sub-Mikrometerbereich aufweist, wobei die Oberfläche ein Material umfasst, das aus mindestens einer Keramik, mindestens einem anorganische Fasern und/oder nicht faserigen Kohlenstoff und/oder Bornitrid enthaltenden Verbundwerkstoff mit Keramik- und/oder Kohlenstoffmatrix, oder einer Kombination derselben ausgewählt ist, bei dem eine das Material umfassende Ausgangsoberfläche, welche noch nicht Oberflächenstrukturen mit Abmessungen im Sub-Mikrometerbereich aufweist und für eine Laserbestrahlung zugänglich ist und auf welcher die Oberflächenstrukturen zu erzeugen sind, vollständig mit einem gepulsten Laserstrahl ein- oder mehrmals auf solche Weise abgetastet wird, dass benachbarte Lichtflecke des Laserstrahls lückenlos aneinander stoßen oder sich überlappen, wobei die folgenden Bedingungen eingehalten werden:

$$0,07 \leq \varepsilon \leq 3000$$

mit

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_L} \cdot \sqrt{c_P} \cdot \sqrt{\lambda}} \cdot 10^3$$

worin:

$P_p$: Impulsspitzenleistung der austretenden Laserstrahlung [kW]

$P_m$: Mittlere Leistung der austretenden Laserstrahlung [W]

t: Impulslänge der Laserimpulse [ns], wobei t 0,1 ns bis 4000 ns ist,

f: Repetitionsrate der Laserimpulse [kHz]

v: Abtastgeschwindigkeit an der Werkstückoberfläche [mm/s]

d: Durchmesser des Laserstrahls am Werkstück [$\mu$m]

$\alpha$: Absorption der Laserstrahlung des bestrahlten Material [%]bei Normalbedingungen

$\lambda$: Wellenlänge der Laserstrahlung [nm], wobei $\lambda$ = 100 nm bis 11000 nm

$T_L$: Schmelztemperatur des Materials [K] bei Normaldruck

$c_p$: Spezifische Wärmekapazität [J/kg·K] bei Normalbedingungen

$\kappa$: Spezifische Wärmeleitfähigkeit [W/m·K] bei Normalbedingungen,

wobei die Atmosphäre, in der das Verfahren stattfindet, Vakuum oder ein gegenüber der Oberfläche inertes Gas oder Gasgemisch ist,

mit der Maßgabe, dass vor dem Abtasten mit dem Laserstrahl kein Haftvermittler aufgebracht wird.

2. Verfahren nach Anspruch 1, bei dem der Druck im Bereich von 0 bar bis 15 bar liegt und die Temperatur außerhalb des Laserstrahls im Bereich von -50°C bis 350°C liegt.

3. Verfahren nach Anspruch 1 oder 2, bei dem $0{,}1 \leq \varepsilon \leq 2300$, mehr bevorzugt $0{,}1 \leq \varepsilon \leq 1700$.

4. Verfahren nach einem der Ansprüche 1 bis 3, bei dem die Impulslänge der Laserimpulse t 0,1 ns bis 2000, mehr bevorzugt 0,1 ns bis 900 ns, insbesondere 1 ns bis 800 ns beträgt.

5. Verfahren nach einem der Ansprüche 1 bis 4, bei dem die Oberfläche vor dem Bestrahlen mit dem Laserstrahl nicht vorbehandelt oder gereinigt wird.

6. Verfahren nach einem der Ansprüche 1 bis 5, bei dem die Impulsspitzenleistung der austretenden Laserstrahlung $P_p$ 1 kW bis 1800 kW beträgt.

7. Verfahren nach einem der Ansprüche 1 bis 6, bei dem die mittlere Leistung der austretenden Laserstrahlung $P_m$ 5 W bis 28000 W beträgt.

8. Verfahren nach einem der Ansprüche 1 bis 7, bei dem die Repetitionsrate der Laserimpulse f 10 kHz bis 3000 kHz beträgt.

9. Verfahren nach einem der Ansprüche 1 bis 8, bei dem die Abtastgeschwindigkeit an der Werkstückoberfläche v 30 mm/s bis 19000 mm/s beträgt.

10. Verfahren nach einem der Ansprüche 1 bis 9, bei dem Durchmesser des Laserstrahls am Werkstück d 20 $\mu$m bis 4500 $\mu$m beträgt.

**Claims**

1. Method for producing a surface of a work piece having surface structures with dimensions in the sub-micrometer range, wherein the surface comprises a material selected from at least one ceramic, at least one composite material containing inorganic fibers and/or non-fibrous carbon and/or boron nitride and having a ceramic and/or carbon matrix, or a combination thereof, wherein a starting surface which comprises the material and which does not yet exhibit surface structures with dimensions in the sub-micrometer range and which is accessible to laser irradiation and on which the surface structures are to be produced, is completely scanned one or more times with a pulsed laser beam in such a manner that adjacent light spots of the laser beam abut one another without gaps or overlap, wherein the following conditions are met:

$$0.07 \leq \varepsilon \leq 3000$$

with

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_L} \cdot \sqrt{c_P} \cdot \sqrt{\lambda}} \cdot 10^3$$

where:

$P_p$: is the pulse peak power of the emerging laser radiation [kW]

$P_m$: is the average power of the emerging laser radiation [W]

t: is the pulse length of the laser pulses [ns], wherein t is 0.1 to 4000 ns

f: is the repetition rate of the laser pulses [kHz]

v: is the scanning speed at the work piece surface [mm/s]

d: is the diameter of the laser beam at the work piece [μm]

α: is the absorption of the laser radiation of the irradiated material [%] under normal conditions

λ: is the wavelength of the laser radiation [nm], wherein λ = 100 nm to 11000 nm

$T_L$: is the melting temperature of the material [K] at normal pressure

$c_p$: is the specific heat capacity [J/kg·K] under normal conditions

κ: is the specific thermal conductivity [W/m·K] under normal conditions, wherein the atmosphere in which the process takes place is a vacuum or a gas or gas mixture inert to the surface,

with the proviso that no bonding agent is applied before the scanning with the laser beam.

2. Method according to claim 1, in which the pressure is within the range of 0 bar to 15 bar and the temperature outside the laser beam is within the range of -50°C to 350°C.

3. Method according to claim 1 or 2, in which $0.1 \leq \varepsilon \leq 2300$, more preferably $0.1 \leq \varepsilon \leq 1700$.

4. Method according to one of the claims 1 to 3, in which the pulse length of the laser pulses t is 0.1 ns to 2000 ns, more preferably 0.1 ns to 900 ns, particularly 1 ns to 800 ns.

5. Method according to one of the claims 1 to 4, in which the surface is not pretreated or cleaned before irradiation with the laser beam.

6. Method according to one of the claims 1 to 5, in which the pulse peak power of the emerging laser radiation $P_p$ is 1 kW to 1800 kW.

7. Method according to one of the claims 1 to 6, in which the average power of the emerging laser radiation $P_m$ is 5 W to 28000 W.

8. Method according to one of the claims 1 to 7, in which the repetition rate of the laser pulses f is 10 kHz to 3000 kHz.

9. Method according to one of the claims 1 to 8, in which the scanning speed at the work piece surface v is 30 mm/s to 19000 mm/s.

10. Method according to one of the claims 1 to 9, in which the diameter of the laser beam at the work piece d is 20 μm to 4500 μm.


**Revendications**

1. Procédé de réalisation d'une surface d'une pièce à oeuvrer, qui présente des structures surfaciques ayant des dimensions dans la plage submicronique,
dans lequel
la surface comprend un matériau qui est choisi parmi au moins une céramique, au moins un matériau composite contenant des fibres inorganiques et/ou du carbone non fibreux et/ou du nitrure de bore avec une matrice de céramique et/ou de carbone, ou une combinaison de ceux-ci,
une surface initiale comprenant ledit matériau et encore dépourvue de structures surfaciques ayant des dimensions dans la plage submicronique et accessible pour une irradiation au laser et sur laquelle les structures surfaciques sont à réaliser, est balayée une fois ou plusieurs fois complètement par un rayon laser pulsé, de telle sorte que des taches lumineuses voisines du rayon laser sont adjacentes les unes aux autres sans lacune ou se chevauchent, en respectant les conditions suivantes :

$$0{,}07 \leq \varepsilon \leq 3000$$

avec

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_L} \cdot \sqrt{c_P} \cdot \sqrt{\lambda}} \cdot 10^3$$

où

$P_p$ : puissance de crête de l'impulsion du rayon laser sortant [kW]
$P_m$ : puissance moyenne du rayon laser sortant [W]
t : longueur d'impulsion des impulsions laser [ns], t étant de 0,1 ns à 4000 ns,
f : fréquence de répétition des impulsions laser [kHz]
v : vitesse de balayage sur la surface de la pièce à oeuvrer [mm/s]
d : diamètre du rayon laser sur la pièce à oeuvrer [μm]
$\alpha$ : absorption du rayon laser du matériau irradié [%] dans des conditions normales
$\lambda$ : longueur d'onde du rayon laser [nm], où $\lambda$ = 100 nm à 11000 nm
$T_L$ : température de fusion du matériau [K] à la pression normale
$c_p$ : capacité thermique spécifique [J/kg · K] dans des conditions normales
$\kappa$ : conductivité thermique spécifique [W/m · K] dans des conditions normales
et l'atmosphère dans laquelle se déroule le procédé est un vide ou un gaz ou mélange gazeux inerte par rapport à la surface,
étant entendu qu'aucun adhésif n'est déposé avant le balayage au rayon laser.

2. Procédé selon la revendication 1, dans lequel la pression est dans la plage de 0 bar à 15 bar et la température à l'extérieur du rayon laser est dans la plage de -50 °C à 350 °C.

3. Procédé selon la revendication 1 ou 2, dans lequel $0,1 \leq \varepsilon \leq 2300$, de préférence $0,1 \leq \varepsilon \leq 1700$.

4. Procédé selon l'une des revendications 1 à 3, dans lequel la longueur d'impulsion t des impulsions laser est de 0,1 ns à 200, de préférence de 0,1 ns à 900 ns, en particulier de 1 ns à 800 ns.

5. Procédé selon l'une des revendications 1 à 4, dans lequel la surface n'est pas traitée ou nettoyée préalablement à l'irradiation par le rayon laser.

6. Procédé selon l'une des revendications 1 à 5, dans lequel la puissance de crête d'impulsion $P_p$ du rayonnement laser sortant est de 1 kW à 1800 kW.

7. Procédé selon l'une des revendications 1 à 6, dans lequel la puissance moyenne $P_m$ du rayonnement laser sortant est de 5 W à 28000 W.

8. Procédé selon l'une des revendications 1 à 7, dans lequel la fréquence de répétition f des impulsions laser est de 10 kHz à 3000 kHz.

9. Procédé selon l'une des revendications 1 à 8, dans lequel la vitesse de balayage v sur la surface de la pièce à oeuvrer est de 30 mm/s à 19000 m/s.

10. Procédé selon l'une des revendications 1 à 9, dans lequel le diamètre d du rayon laser sur la pièce à oeuvrer est de 20 μm à 4500 μm.

## Fig. 1

(a)

(b)

## Fig. 2

Fig. 3

Fig. 4

Fig. 5

## Fig. 6

## Fig. 7

(a)

(b)

Fig. 8

Fig. 9

Fig. 10

Fig. 11

(a)

(b)

Fig. 12

## Fig. 13

(a)

(b)

## Fig. 14

Fig. 15

Fig. 16

(a)

(b)

Fig. 17

Fig. 18

Fig. 19

Fig. 20

Fig. 21

Fig. 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0914395 B1

- US 6120725 A